# EUROPÄISCHE PATENTANMELDUNG

(11) **EP 4 765 895 A1**
(43) Veröffentlichungstag der Anmeldung: **24.06.2026**
(21) Anmeldenummer: 25221423.4
(22) Anmeldetag: 08.12.2025
(51) Int. Cl.: H04W 4/38, G01S 7/41, G06V 10/82, H04W 4/90, G06N 3/045

(54) **VORRICHTUNG ZUR ERFASSUNG VON PERSONEN IN EINEM ÜBERWACHUNGSBEREICH**

(30) Priorität: 19.12.2024 DE 102024139120
(71) Anmelder: Pilz GmbH & Co. KG, 73760 Ostfildern (DE)
(72) Erfinder: Döttling, Dietmar, 73760 Ostfildern (DE); Aziz, Fady, 73760 Ostfildern (DE)
(74) Vertreter: Witte, Weller & Partner Patentanwälte mbB

(57) **Zusammenfassung**

Vorrichtung (10) zur Erfassung von Personen in einem Überwachungsbereich einer technischen Anlage, aufweisend: eine erste Schnittstelle (12) zur Aufnahme eines multimodalen Sensorsignals (16), einen ersten Verarbeitungskanal (18), der dazu eingerichtet ist, das multimodale Sensorsignal (16) gemäß einem ersten Verarbeitungsverfahren auszuwerten, um ein erstes Erfassungsergebnis zu generieren, einen zweiten Verarbeitungskanal (20), der dazu eingerichtet ist, das multimodale Sensorsignal (16) gemäß einem zweiten Verarbeitungsverfahren auszuwerten, um ein zweites Erfassungsergebnis zu generieren, sowie eine Validierungseinheit (26), die da dazu eingerichtet ist, das erste Erfassungsergebnis und das zweite Erfassungsergebnis miteinander zu vergleichen. Das erste Verarbeitungsverfahren basiert auf einem ersten trainierten neuronalen Netz (22) und das zweite Verarbeitungsverfahren basiert auf einem zweiten trainierten neuronalen Netz (24). Das erste Verarbeitungsverfahren und das zweite Verarbeitungsverfahren sind diversitär verschieden voneinander.

## Beschreibung

Die vorliegende Erfindung betrifft eine Vorrichtung und ein Verfahren zur Erfassung von Personen in einem Überwachungsbereich, insbesondere zur Absicherung von Gefahrenbereichen von Maschinen und industriellen Anlagen.

Bisher werden zur Absicherung von Gefahrenbereichen überwiegend Lichtschranken, Laserscanner und Lichtgitter verwendet, häufig in Kombination mit mechanischen Absperrungen. Der Einsatz dieser Schutzeinrichtungen erfordert jedoch meist eine aufwendige Installation und Justierung, insbesondere in industriellen Umgebungen, in denen Flexibilität und Anpassungsfähigkeit an wechselnde Betriebssituationen gefragt sind. Diese Systeme stoßen schnell an ihre Grenzen, wenn der Schutzbereich dynamisch an unterschiedliche Betriebsbedingungen angepasst werden muss.

Ebenso sind diese Systeme ungeeignet, wenn für bestimmte Betriebssituationen zu unterscheiden ist, ob ein im Gefahrenbereich erkanntes Objekt ein Mensch ist oder nicht. Um diese Einschränkungen zu überwinden, finden zunehmend smarte Sensoren oder Multifunktionssensoren Anwendung, die eine erhöhte Flexibilität und Effizienz bieten. Smarte Sensoren bzw. Multifunktionssensoren können optische Sensoren, wie Kameras, oder Radarsensoren sein, die mithilfe geeigneter Signalverarbeitung nicht nur Objekte in einem Gefahrenbereich detektieren können, sondern auch weitere Informationen zu den Objekten liefern. Die weiteren Informationen können durch geschickte Kombination dazu verwendet werden, Menschen von anderen Objekten zu unterscheiden, und ermöglichen damit eine flexible Steuerung einer technischen Anlage oder eine flexible Anpassung von Sicherheitsbereichen um eine technische Anlage herum. Folglich können durch den Einsatz solcher Sensoren mit entsprechenden Auswertevorrichtungen neue dynamische Sicherheitskonzepte realisiert werden.

Es versteht sich, dass von den smarten Sensoren bzw. Multifunktionssensoren und deren Auswertevorrichtungen, insbesondere von den für Auswertung herangezogenen Auswertealgorithmen, eine hohe Fehlersicherheit gefordert wird. Dies gilt besonders dann, wenn diese Sensoren zum Schutz von Personen vor Gefahr bringenden Maschinen eingesetzt werden. Einige smarte Sensoren bzw. Multifunktionssensoren sind bereits als funktional sichere Einheiten ausgelegt und für den Gebrauch gemäß den einschlägigen Sicherheitsnormen zertifiziert. Die Integrität und die Validität der von diesen Sensoren bereitgestellten Daten können somit gewährleistet werden. Die Wahrscheinlichkeit des Auftretens von Fehlern im Signalpfad des Sensors oder von Fehlern in der Berechnung der Sensordaten können folglich minimiert werden, sodass ein Ausfall des Sensors mit ausreichender Wahrscheinlichkeit ausgeschlossen werden kann.

Ferner sind einzelne Methoden bekannt, um die Auswertungsvorrichtungen solcher Sensoren sowie die für die Auswertung herangezogenen Auswertealgorithmen zu überprüfen. EP 4 098 927 A1 zeigt bspw. eine Sensoranordnung mit wenigstens einem Sensor zur Erfassung von Objekten, bei der eine mehrkanalige Auswertung mit mehreren KI-Verarbeitungsalgorithmen durchgeführt wird. Wesentlich hierbei ist, dass die Eingabedaten für die einzelnen KI-Verarbeitungsalgorithmen diversitär, d. h. unterschiedlich und unabhängig voneinander sind. Indem voneinander unabhängige Eingabedaten verwendet oder generiert werden, ist es möglich, die Gesamtfehlwahrscheinlichkeit zu reduzieren, um eine bessere Fehlersicherheit der Sensoranordnung zu erreichen.

Diversitäre und voneinander unabhängige Eingabedaten von einem einzelnen Sensor zu erhalten oder zu generieren, ist jedoch mit einem recht hohen Aufwand verbunden und teilweise sogar unmöglich. So sind bei vielen smarten Sensoren bzw. Multifunktionssensoren, wie Kameras oder Radarsensoren, die bereitgestellten Messgrößen und -werte regelmäßig miteinander verbunden und somit inhärent voneinander abhängig. Fehlerfrei nachzuweisen, dass zwei von einem Sensor bereitgestellten Messgrößen unabhängig voneinander sind, ist daher nicht immer möglich oder mit einem Restrisiko behaftet. Wünschenswert wäre daher eine Vorrichtung, die nicht auf das Vorhandensein von voneinander unabhängigen Eingabedaten angewiesen ist und trotzdem eine hohe Zuverlässigkeit bei der Personenerkennung ermöglicht.

Vor diesem Hintergrund ist es eine Aufgabe der vorliegenden Erfindung eine verbesserte Vorrichtung zur Erfassung von Personen in einem Überwachungsbereich anzugeben, die eine sichere und zuverlässige Detektion von Personen in dem Überwachungsbereich ermöglicht und sich einfach und kostengünstig realisieren lässt. Insbesondere ist es eine Aufgabe, eine Vorrichtung anzugeben, die eine sichere Auswertung auch ohne diversitär voneinander unabhängige Eingabedaten ermöglicht.

Gemäß einem Aspekt der vorliegenden Offenbarung wird diese Aufgabe gelöst durch eine Vorrichtung zur Erfassung von Personen in einem Überwachungsbereich einer technischen Anlage, aufweisend: eine erste Schnittstelle zur Aufnahme eines multimodalen Sensorsignals, einen ersten Verarbeitungskanal, der dazu eingerichtet ist, das multimodale Sensorsignal gemäß einem ersten Verarbeitungsverfahren auszuwerten, um ein erstes Erfassungsergebnis zu generieren, einen zweiten Verarbeitungskanal, der dazu eingerichtet ist, das multimodale Sensorsignal gemäß einem zweiten Verarbeitungsverfahren auszuwerten, um ein zweites Erfassungsergebnis zu generieren, sowie eine Validierungseinheit, die da dazu eingerichtet ist, das erste Erfassungsergebnis und das zweite Erfassungsergebnis miteinander zu vergleichen, dadurch gekennzeichnet, dass das erste Verarbeitungsverfahren auf einem ersten trainierten neuronalen Netz basiert und das zweite Verarbeitungsverfahren auf einem zweiten trainierten neuronalen Netz basiert und das erste Verarbeitungsverfahren und das zweite Verarbeitungsverfahren diversitär verschieden voneinander sind.

Gemäß einem weiteren Aspekt wird diese Aufgabe durch ein Verfahren zur Erfassung von Personen in einem Überwachungsbereich einer technischen Anlage gelöst, wobei das Verfahren die folgenden Schritte aufweist:
- Aufnehmen eines multimodalen Sensorsignals über eine erste Schnittstelle;
- Auswerten des multimodalen Sensorsignals mit einem ersten Verarbeitungsverfahren in einem ersten Verarbeitungskanal, um ein erstes Erfassungsergebnis zu generieren;
- Auswerten des multimodalen Sensorsignals mit einem zweiten Verarbeitungsverfahren in einem zweiten Verarbeitungskanal, um ein zweites Erfassungsergebnis zu generieren; sowie
- Vergleichen des ersten Erfassungsergebnisses mit dem zweiten Erfassungsergebnis durch eine Validierungseinheit,
dadurch gekennzeichnet, dass das erste Verarbeitungsverfahren auf einem ersten trainierten neuronalen Netz basiert und das zweite Verarbeitungsverfahren auf einem zweiten trainierten neuronalen Netz basiert und das erste Verarbeitungsverfahren und das zweite Verarbeitungsverfahren diversitär verschieden voneinander sind.

Es ist somit eine Idee der vorliegenden Erfindung, ein und dasselbe multimodale Sensorsignal von zwei getrennten Verarbeitungskanälen zu verarbeiten und die dabei gewonnenen Ergebnisse miteinander abzugleichen, um eine Plausibilität der einzelnen Auswertungen der Kanäle zu überprüfen. Die beiden Verarbeitungskanäle führen dabei zwei voneinander verschiedene Verarbeitungsverfahren aus, die jeweils auf der Anwendung eines trainierten neuronalen Netzes basieren. Ein multimodales Sensorsignal ist in diesem Zusammenhang ein Signal, welches verschiedene Arten von Messgrößen und Messwerten für einen von dem Sensor erfassten Bereich beinhaltet. Mit anderen Worten: Der Begriff multimodales Sensorsignal bezeichnet ein Signal, das verschiedene Arten von Messgrößen und Messwerten für eine bestimmte Aufnahme eines Erfassungsbereichs enthält. Das bedeutet, dass das Sensorsignal Informationen aus mehreren Modalitäten (also unterschiedlichen physikalischen oder sensorischen Perspektiven) kombiniert, um ein umfassenderes Bild des Erfassungsbereichs oder einzelner Objekte in dem Erfassungsbereich zu liefern.

Ein multimodales Sensorsignal kann zum Beispiel die Kombination verschiedener Datenströme umfassen, die aus unterschiedlichen sensorischen Quellen stammen oder auf verschiedenen physikalischen Prinzipien basieren. Für eine Kamera könnten das etwa visuelle Daten (wie Helligkeit oder Farbwerte) und Tiefendaten (Abstände zu Objekten in der Szene) sein. Ein Radar könnte Informationen über die Geschwindigkeit und Position von Objekten liefern. Diese multimodalen Datenströme werden innerhalb eines Signals zusammengeführt und dann in unterschiedlichen Verarbeitungskanälen verarbeitet. Die Verarbeitungskanäle nutzen jeweils ein eigenes neuronales Netz, das speziell auf eine bestimmte Modalität oder Kombination von Messgrößen trainiert ist. Das Ziel dabei ist, die Ergebnisse beider Kanäle zu vergleichen und so die Plausibilität und Zuverlässigkeit der Personenerkennung zu überprüfen.

Ein Vorteil dieses Ansatzes ist es, dass die Datenströme nicht zwangsläufig diversitär und voneinander verschieden sein müssen. Vielmehr werden die Verarbeitungsverfahren der einzelnen Kanäle so gewählt, dass sie diversitär voneinander verschieden sind. Bei abhängigen Datenströmen können fehlerhafte Artefakte in einem von den Datenströmen abgeleiteten Signal enthalten bleiben und eine Auswertung beeinflussen. Die Verarbeitungsverfahren müssen daher so gewählt werden, dass sie im Hinblick auf die jeweilige Anwendung derart diversitär ausgestaltet sind, dass auch bei fehlerhaften Artefakten in den abgeleiteten Signalen eine zuverlässige und sichere Auswertung erreicht wird. Solche Verfahren aufzufinden ist dabei grundsätzlich leichter, als eine Unabhängigkeit der von einem Sensor aufgenommenen Messgrößen zu garantieren. Überdies können Verarbeitungsverfahren leichter angepasst, ausgetauscht oder in ihrer Anzahl skaliert und so an die jeweilige Anwendungssituation angepasst werden. Die Möglichkeiten zur Bereitstellung unabhängiger Messgrößen von einem Sensor ist demgegenüber stark begrenzt.

Mit der aufgezeigten Vorrichtung und dem entsprechenden Verfahren lässt sich somit eine sichere und zuverlässige Detektion von Personen in einem Überwachungsbereich effizient, flexibel und kostengünstig erreichen, ohne dass auf diversitär verschiedene Eingangsgrößen oder unterschiedliche Sensortypen zurückgegriffen werden muss. Die eingangs genannte Aufgabe ist somit vollständig gelöst.

In einer weiteren Ausgestaltung ist das multimodale Sensorsignal ein digitales Datensignal, das eine Vielzahl von (zusammenhängenden) physikalischen Messgrößen beinhaltet, die eine oder mehrere Eigenschaften eines oder mehrerer Objekte in dem Überwachungsbereich repräsentieren.

Gemäß dieser Ausgestaltung stellt das multimodale Sensorsignal somit ein digitales Datensignal dar, welches verschiedene physikalische Messgrößen umfasst, die spezifische Eigenschaften eines oder mehrerer Objekte im Überwachungsbereich abbilden. Diese Messgrößen können entweder voneinander abhängige oder unabhängige Parameter repräsentieren, die eine präzisere Erkennung und Klassifizierung der Objekte ermöglichen. Entscheidend bei dieser Herangehensweise ist die Fülle an Parametern, die ein Signal bereitstellt, da sie die Anwendung diversitärer Verarbeitungsverfahren auf neuronalen Netzwerken begünstigt. Durch die Vielfalt an Parametern kann das System effizient an unterschiedliche Einsatzszenarien angepasst werden, indem gezielt Netzwerke mit spezifischen Auswertungsstrategien eingesetzt werden.

Ein weiterer Vorteil dieser Konfiguration liegt darin, dass das multimodale Sensorsignal bereits objektbezogene Parameter liefern kann, die es der Auswertungseinheit erlauben, sich primär auf die Klassifizierung der Objekte zu konzentrieren, anstatt auf deren Separation. Dies vereinfacht die Verarbeitungsschritte und ermöglicht eine schnellere sowie ressourcenschonende Umsetzung.

Ebenso bietet diese Architektur den Vorteil, dass weitere neuronale Netzwerke oder zusätzliche Verarbeitungsverfahren ohne wesentliche Systemanpassungen integriert werden können, wodurch die Erkennung und Klassifizierung von Objekten flexibel erweitert und optimiert werden können. Diese Modularität ist besonders nützlich in industriellen Anwendungen, in denen sich die Erfordernisse des Überwachungsbereichs dynamisch ändern können. Durch diese Anpassungsfähigkeit kann die Vorrichtung gezielt auf veränderte Gefährdungsszenarien reagieren und damit einen hohen Sicherheitsstandard bei gleichzeitig niedrigen Implementierungskosten sicherstellen.

Insbesondere können die Eigenschaften eine Objektentfernung, eine Geschwindigkeit, eine Bewegungsrichtung, eine Winkelposition und/oder eine Objektklassifizierung beinhalten. Diese Eigenschaften ermöglichen eine umfassende Analyse der Objekte im Überwachungsbereich und tragen zur präzisen Erkennung und Klassifizierung bei.

Die Objektentfernung gibt an, wie weit ein Objekt vom Sensor entfernt ist, was für die Bestimmung der räumlichen Position des Objekts im Überwachungsbereich entscheidend ist. Die Geschwindigkeit und Bewegungsrichtung eines Objekts sind wichtige Parameter, um dynamische Veränderungen im Überwachungsbereich zu erfassen und potenzielle Gefahrensituationen frühzeitig zu erkennen. Die Winkelposition eines Objekts hilft, die genaue Lage des Objekts im dreidimensionalen Raum zu bestimmen, was besonders in komplexen industriellen Umgebungen von Bedeutung ist.

Die Objektklassifizierung ist ein zentraler Aspekt, der es ermöglicht, zwischen verschiedenen Arten von Objekten zu unterscheiden. Die Objektklassifizierung durch den Sensor kann als zusätzliche Information herangezogen werden und bei der Analyse durch die Verarbeitungseinheiten unterstützen, insbesondere bei der Unterscheidung zwischen Menschen und anderen Objekten.

In einer weiteren Ausgestaltung beinhalten die physikalischen Messgrößen eine Zeit, eine Frequenzverschiebung, eine Phasenverschiebung, eine Laufzeitdifferenz, eine Signalintensität und/oder eine Amplitude.

Eine Ausgestaltung, die zusätzliche physikalische Messgrößen wie Zeit, Frequenzverschiebung, Phasenverschiebung, Laufzeitdifferenz, Signalintensität und Amplitude berücksichtigt, bietet Vorteile hinsichtlich Genauigkeit und Flexibilität der Personenerkennung im Überwachungsbereich. Diese Eigenschaften ermöglichen eine tiefere Analyse der Umgebungsparameter und bieten eine zuverlässigere Datengrundlage, da sie nicht nur die räumliche Lage und Bewegung, sondern auch feine Unterschiede in den Objektsignalen erfassen. So können beispielsweise Phasen- und Frequenzverschiebungen dazu beitragen, Objekte anhand spezifischer Signaturmerkmale zu differenzieren, was besonders nützlich ist, wenn es darum geht, Personen von anderen beweglichen oder statischen Objekten zu unterscheiden. Durch die Berücksichtigung von Laufzeitdifferenzen kann die Vorrichtung ferner präzise Informationen über die Entfernung von Objekten gewinnen, selbst in komplexen Szenarien mit mehreren Objekten und Hindernissen. Die Signalintensität und Amplitude können zusätzliche Hinweise auf die Beschaffenheit oder Größe eines Objekts liefern. Unterschiedliche Materialeigenschaften und Größen können zu spezifischen Intensitäts- und Amplitudenmustern führen, die für die Klassifizierung und Identifikation der Objekte relevant sind. Insgesamt trägt diese Ausgestaltung durch ihre präzise und differenzierte Erfassung der Objektmerkmale dazu bei, eine zuverlässige und adaptive Sicherheitslösung zu schaffen. Die hohe Granularität der erfassten Daten ermöglicht es der Vorrichtung, auch in dynamischen und komplexen Überwachungsbereichen flexibel auf Veränderungen zu reagieren und Personen sicher von anderen Objekten zu unterscheiden.

In einer weiteren Ausgestaltung ist das multimodale Sensorsignal ein Ausgangssignal eines Radarsensors, insbesondere eines MIMO-Radarsensors.

Gemäß dieser Ausgestaltung stellt das multimodale Sensorsignal somit ein Ausgangssignal eines Radarsensors dar, wobei sowohl konventionelle Radarsensoren als auch MIMO-(Multiple Input Multiple Output)-Radarsensoren zur Anwendung kommen können. Konventionelle Radarsensoren sind grundsätzlich gut geeignet für die Überwachung industrieller Umgebungen, da sie eine zuverlässige Detektion und Entfernungsmessung von Objekten ermöglichen und dabei unempfindlich gegenüber typischen industriellen Umwelteinflüssen wie Staub, Ölnebel oder Schweißfunken sind. Diese Robustheit minimiert Wartungsaufwände und gewährleistet eine hohe Betriebssicherheit. Zudem sind Radarsensoren gegenüber Umwelteinflüssen wie Regen, Nebel oder direkter Sonneneinstrahlung beständig, was sie ideal für den Einsatz im Außenbereich und unter wechselnden Bedingungen machen.

MIMO-Radarsensoren bauen auf den grundlegenden Vorteilen konventioneller Radarsensoren auf und bieten darüber hinaus zusätzliche Möglichkeiten zur Optimierung und Verbesserung der Überwachung. Die MIMO-Technologie ermöglicht es, durch mehrere Sende- und Empfangsantennen eine höhere räumliche Auflösung zu erzielen. Dadurch lässt sich ein detaillierteres dreidimensionales Bild des Überwachungsbereichs erstellen, das eine präzisere Positions- und Bewegungsanalyse von Objekten erlaubt. Diese erweiterte Erfassungskapazität macht MIMO-Radarsensoren besonders vorteilhaft für komplexe Szenarien, in denen eine detaillierte Differenzierung von Objekten erforderlich ist.

Ferner ermöglicht die MIMO-Radartechnologie, eine Vielzahl an Parametern wie Entfernung, Geschwindigkeit und Bewegungsrichtung in hoher Präzision gleichzeitig zu erfassen und in einem multimodalen Sensorsignal bereitzustellen. Diese Vielfalt an Messdaten trägt zu einer besseren Analyse bei und hilft, Gefahren frühzeitig zu erkennen und flexibel auf Veränderungen in der Umgebung zu reagieren. Durch die höhere räumliche und zeitliche Auflösung ist es MIMO-Radarsensoren zudem möglich, selbst subtile Bewegungen zu erfassen, was bei der Detektion von Personen vorteilhaft sein kann. Grundsätzlich fördert die MIMO-Technologie eine genauere Klassifizierung und Identifikation von Objekten, wie etwa die Unterscheidung zwischen Personen und anderen Gegenständen. Die erhöhte Datenrate und -dichte des MIMO-Signals ermöglichen eine detaillierte Signaturanalyse, die für sicherheitskritische Anwendungen wertvoll ist, da auf dieser Basis gezielte Reaktionen auf unterschiedliche Objektarten erfolgen können.

In einer weiteren Ausgestaltung ist das multimodale Sensorsignal ein Signal eines funktional sicheren Sensors, insbesondere eines funktional sicheren Radarsensors.

In einer weiteren Ausgestaltung ist der Sensor, der das multimodale Sensorsignal bereitstellt, ein funktional sicherer Sensor, insbesondere ein funktional sicherer Radarsensor. Funktional sichere Sensoren sind so konzipiert, dass sie den Anforderungen internationaler Sicherheitsnormen entsprechen und integrierte Mechanismen zur Eigenfehlersicherheit bieten. In Europa gelten hierfür u.a. die Normen EN IEC 61496 für berührungslose Schutzeinrichtungen und EN IEC 61508 für funktionale Sicherheit. Diese Normen legen fest, dass der Sensor so entwickelt und validiert ist, dass die Integrität und Validität der erfassten Daten auch im Falle eines Fehlers gewährleistet ist. Ein funktional sicherer Sensor minimiert somit die Wahrscheinlichkeit, dass Fehlfunktionen oder Signalfehler auftreten, die zu unerwünschten oder unzuverlässigen Ergebnissen führen könnten.

Durch den Einsatz funktional sicherer Sensoren kann sichergestellt werden, dass die von den Sensoren erfassten und übermittelten Daten mit hoher Zuverlässigkeit und Genauigkeit bereitgestellt werden. Dies ist entscheidend für sicherheitskritische Anwendungen, in denen Personen geschützt und Gefahren frühzeitig erkannt werden müssen. Die zuverlässige Datenerfassung erhöht die Robustheit des gesamten Überwachungssystems und verringert die Wahrscheinlichkeit eines gefährlichen Ausfalls.

Darüber hinaus erlaubt ein funktional sicherer Radarsensor eine effizientere Verarbeitung in nachgelagerten Verarbeitungsverfahren. Da das Sensorsignal bereits eine hohe Fehlersicherheit aufweist, können die Verarbeitungsalgorithmen ihre Analyse auf eine robuste Datengrundlage stützen, ohne zusätzliche Sicherheitsmechanismen zur Fehlerkorrektur oder Plausibilitätsprüfung einführen zu müssen. Dies spart nicht nur Rechenressourcen, sondern ermöglicht auch eine schnellere und ressourcenschonendere Verarbeitung, die für Echtzeitanwendungen im industriellen Umfeld entscheidend ist.

In einer weiteren Ausgestaltung ist das erste trainierte neuronale Netz dazu eingerichtet, eine Konturerkennung anhand des multimodalen Sensorsignals durchzuführen, und das erste Erfassungsergebnis entspricht einer Personenerkennung anhand der Konturerkennung.

Gemäß dieser Ausgestaltung ist das erste trainierte neuronale Netz somit dazu eingerichtet, eine Personenerkennung anhand einer Konturerkennung durchzuführen. Dabei kann die Konturerkennung bspw. als Bestandteil eines Point-Cloud-Estimation-Verfahrens umgesetzt werden, das die vom Sensor gelieferten multimodalen Daten, insbesondere von einem MIMO-Radarsensor, verarbeitet. In diesem Fall ist das neuronale Netz speziell darauf trainiert, aus den Sensordaten eine Punktwolke zu erstellen, aus der Konturen extrahiert und mit charakteristischen Konturen von Personen verglichen werden, um so eine präzise Personenerkennung zu ermöglichen.

Das neuronale Netz übernimmt somit die Aufgabe, die räumliche Struktur der erfassten Objekte zu analysieren, indem es relevante Merkmale aus der Punktwolke extrahiert und diese zur Konturerkennung nutzt. Diese, auch als "Point-Cloud-Estimation" bezeichnete Herangehensweise, ermöglicht es, eine detaillierte Analyse der Form und Kontur von Objekten durchzuführen und zwischen Personen und anderen Objekten zu unterscheiden. Durch das Training des neuronalen Netzes auf die Erkennung charakteristischer Personenmerkmale kann eine Genauigkeit der Klassifizierung und Erkennung deutlich verbessert werden.

Ein weiterer Vorteil dieser Ausgestaltung liegt zudem in der hohen Anpassungsfähigkeit des neuronalen Netzes, das durch kontinuierliches Training und Erweiterung des Datensatzes an unterschiedliche Betriebsbedingungen und Variationen von Personenkonturen, wie sie etwa durch Schutzkleidung, Körperhaltungen oder Bewegungen entstehen, angepasst werden kann. Dadurch bleibt die Erkennung auch unter variierenden Umgebungsbedingungen robust und zuverlässig.

In einer weiteren Ausgestaltung ist das zweite trainierte neuronal Netz dazu eingerichtet, eine Spektralanalyse anhand des multimodalen Sensorsignals durchzuführen, und das zweite Erfassungsergebnis entspricht einer Personenerkennung anhand der Spektralanalyse.

Die Spektralanalyse, die das zweite trainierte neuronale Netz durchführt, ermöglicht eine detaillierte Untersuchung von Frequenzmustern, die im multimodalen Sensorsignal enthalten sind. Dieses Verfahren kann dabei helfen, sogenannte Mikrobewegungen zu erkennen, die besonders bei Personen charakteristische Signaturen aufweisen. Zu diesen Mikrobewegungen zählen kleinste periodische Veränderungen, wie sie durch den Herzschlag und die Atmung einer Person verursacht werden. Diese Bewegungen sind zwar minimal und oft nicht sichtbar, erzeugen jedoch messbare Frequenzänderungen im Radarsignal, die im Spektralbereich erkannt und analysiert werden können.

Das zweite neuronale Netz ist speziell darauf trainiert, solche subtilen Signale zu extrahieren und ihre Frequenzmuster zu analysieren, um so eine zuverlässige Unterscheidung zwischen menschlichen und nicht-menschlichen Objekten zu ermöglichen. Herzschlag und Atmung sind physiologische Merkmale, die bei Menschen standardmäßig auftreten und spezifische Frequenzmuster aufweisen, die von anderen Bewegungen oder statischen Objekten im Überwachungsbereich unterscheidbar sind. Durch die Erkennung dieser Mikrobewegungen kann das System auch dann Personen detektieren, wenn sie sich kaum oder gar nicht bewegen, was bei herkömmlichen Detektionsmethoden eine Herausforderung darstellt.

Die Spektralanalyse ergänzt sich optimal mit der zuvor beschriebenen Konturerkennung. Während die Konturerkennung auf der räumlichen Analyse von Punktwolken basiert und primär die äußeren Umrisse und Formen eines Objekts abgleicht, geht die Spektralanalyse tiefer und erfasst interne, physiologische Bewegungen. Durch die Kombination beider Verfahren wird das System robuster und flexibler: Es kann zuverlässig Personen identifizieren, selbst wenn diese durch verschiedene Umstände verdeckt, statisch oder unauffällig sind. Dies gewährleistet eine zuverlässige Personenerkennung in unterschiedlichen Überwachungsszenarien und trägt zu einem hohen Sicherheitsstandard bei, da es selbst subtile Hinweise auf das Vorhandensein einer Person im Überwachungsbereich erfassen kann.

Die beiden beschriebenen Verfahren, Konturerkennung und Spektralanalyse, arbeiten auf denselben multimodalen Sensordaten, nutzen jedoch vollständig unterschiedliche Ansätze zur Personenerkennung. Während die Konturerkennung darauf fokussiert ist, aus räumlichen Daten Umrisse und Strukturen von Objekten im Überwachungsbereich zu extrahieren, konzentriert sich die Spektralanalyse auf die Frequenzkomponenten im Signal, die durch mikroskopische Bewegungen wie Herzschlag und Atmung hervorgerufen werden.

Durch diesen methodischen Unterschied entsteht eine natürliche Diversität bei der Auswertung der multimodalen Daten, selbst wenn einzelne Parameter, wie etwa Position oder Geschwindigkeit, innerhalb des multimodalen Signals voneinander abhängig sein sollten. Die Konturerkennung verarbeitet vorrangig geometrische und strukturelle Eigenschaften, während die Spektralanalyse tiefgehende Frequenzinformationen untersucht. Diese Diversität reduziert das Risiko, dass systematische Abhängigkeiten oder Artefakte in den Sensordaten beide Erkennungsmethoden gleichermaßen beeinflussen, und sorgt dafür, dass selbst bei geringfügigen Abweichungen oder Abhängigkeiten in den Eingangsdaten eine zuverlässige und robuste Personenerkennung möglich ist.

So wird durch den parallelen Einsatz der beiden Verfahren auf derselben Datenbasis ein höherer Sicherheitsstandard erreicht, ohne dass dafür diversitäre Eingangsdaten erforderlich sind. Die beiden Verarbeitungsmethoden ergänzen sich und erhöhen die Zuverlässigkeit des Systems, da das System im Vergleich der unterschiedlichen Erkennungsergebnisse in der Lage ist, die Plausibilität und Genauigkeit der Personenerkennung zu überprüfen und damit auch in dynamischen oder komplexen Überwachungsszenarien eine präzise Erkennung sicherzustellen.

In einer weiteren Ausgestaltung weist die Vorrichtung ferner eine Verfolgungseinheit auf, die dazu ausgebildet ist, anhand des multimodalen Sensorsignals eine anfängliche Objektliste auf der Grundlage der in dem multimodalen Sensorsignal enthaltenen Objektabstandsinformationen zu erstellen. Insbesondere kann die Vorrichtung dazu eingerichtet sein, das multimodale Sensorsignal zyklisch aufzunehmen, wodurch die Verfolgungseinheit die initiale Objektliste zyklisch aktualisieren kann.

Eine Objektliste hat den Vorteil, dass die Verarbeitungsverfahren für ihre Auswertung auf diese Liste zurückgreifen und eine objektbezogene Auswertung durchführen können. Auf diese Weise können die Verarbeitungsverfahren vereinfacht werden. Ferner erlaubt die Objektliste ein kontinuierliches Tracking von Objekten über die Zeit, sodass eine neue Identifizierung vermieden werden kann. Die Ausgestaltung tritt somit zu einer vereinfachten Implementierung der vorliegenden Vorrichtung bei.

Insbesondere kann das erste Verarbeitungsverfahren und das zweite Verarbeitungsverfahren jeweils dazu eingerichtet sein, einem jedem Objekt der initialen Objektliste einen Wahrscheinlichkeitswert, der eine Wahrscheinlichkeit angibt, dass das Objekt einer Person entspricht, zuzuordnen.

Durch die Verwendung dieser Wahrscheinlichkeitswerte kann das System differenzierte Entscheidungen treffen und situationangepasst reagieren. Die Wahrscheinlichkeitseinschätzung ermöglicht es, Objekte kontinuierlich und verlässlich zu klassifizieren, ohne bei jeder Erfassung eine vollständig neue Identifikation durchführen zu müssen. Auf diese Weise kann das System bestehende Objekte gezielt weiterverfolgen und über Zeiträume hinweg eine kohärente Analyse durchführen.

Ein weiterer Vorteil dieser Wahrscheinlichkeitsbewertung besteht in der Möglichkeit, dass das System bei mehrdeutigen oder unklaren Situationen auf einer fundierten Grundlage eine plausible Entscheidung treffen kann, auch wenn die Erkennungsbedingungen nicht ideal sind. Die dynamische Anpassung der Wahrscheinlichkeitswerte führt zu einer erhöhten Flexibilität des Verfahrens, sodass Personen auch unter schwierigen oder wechselnden Bedingungen erkannt werden können. Dies ist insbesondere wertvoll in Szenarien, in denen Personen sich teilweise verdeckt oder kaum sichtbar in einem Überwachungsbereich aufhalten. Da das System nicht auf eine starre Klassifizierung angewiesen ist, sondern über Wahrscheinlichkeiten arbeitet, wird die Zuverlässigkeit und Genauigkeit der Erkennung erhöht, ohne dass hierfür eine erhöhte Rechenleistung notwendig ist.

Darüber hinaus trägt die Objektliste zu einer ressourcenschonenden Datenverarbeitung bei, da die Verarbeitungsverfahren sich auf die identifizierten Objekte in der Liste konzentrieren können, anstatt das gesamte Überwachungsfeld erneut analysieren zu müssen. Durch das gezielte Tracking kann das System also effizienter arbeiten und die Rechenressourcen optimal nutzen. Die Kombination aus Wahrscheinlichkeitseinschätzungen und kontinuierlicher Objektverfolgung ermöglicht es dem System, adaptiv und präzise auf Veränderungen im Überwachungsbereich zu reagieren, wodurch sich die Zuverlässigkeit und Flexibilität der Personenerkennung nochmals steigert.

In einer weiteren Ausgestaltung kann die Validierungseinheit dazu eingerichtet sein, für jedes Objekt der initialen Objektliste einen Vergleich des ersten Erfassungsergebnisses und des zweiten Erfassungsergebnisses durchzuführen.

Durch den direkten Vergleich der Erkennungsergebnisse beider Verarbeitungsverfahren - eines bspw. auf der Konturerkennung und eines bspw. auf der Spektralanalyse basierend - wird eine höhere Zuverlässigkeit erzielt, da mögliche Unstimmigkeiten oder fehlerhafte Erkennungen schnell identifiziert und korrigiert werden können. Diese Prüfung ermöglicht es dem System, die Konsistenz der Ergebnisse zu bewerten und bei Abweichungen eine Plausibilitätskontrolle durchzuführen. Dies ist insbesondere in sicherheitskritischen Anwendungen von großer Bedeutung, da das System dadurch die Wahrscheinlichkeit von Fehlalarmen oder Fehldetektionen minimiert.

Zudem trägt dieser Vergleich zur Verbesserung der Gesamtsicherheit bei, da das System in der Lage ist, Unsicherheiten oder potenzielle Fehler eines Verfahrens zu kompensieren. Ein Verfahren allein könnte unter bestimmten Bedingungen - etwa bei variierenden Lichtverhältnissen oder Verdeckungen im Überwachungsbereich - weniger zuverlässige Ergebnisse liefern. Durch die Verwendung zweier unterschiedlicher Verfahren, die auf denselben Sensordaten basieren, aber unterschiedliche Ansätze verfolgen, wird die Wahrscheinlichkeit erhöht, dass eine Person korrekt identifiziert wird, selbst in anspruchsvollen Szenarien oder bei wechselnden Bedingungen.

Insbesondere kann die Validierungseinheit dazu eingerichtet sein, den Vergleich zyklisch durchzuführen und ein Gesamtergebnis über mehrere Zyklen auszugeben.

Diese Ausgestaltung hat den Vorteil, dass das gesamte Verfahren fehlertolerant gestaltet werden kann. Durch die zyklische Überprüfung der Erkennungsergebnisse beider Auswerteverfahren und die Aggregation der Resultate über mehrere Zyklen hinweg kann das System kurzzeitige Schwächen oder Ausfälle eines oder beider Verfahren besser kompensieren. Wenn beispielsweise die Umgebungsbedingungen - etwa durch temporäre Verdeckungen oder unzureichende Lichtverhältnisse bei Kamerasensoren - dazu führen, dass eines der Verarbeitungsverfahren eine ungenaue Erkennung liefert, kann das System auf die Resultate der vorhergehenden Auswertezyklen zurückgreifen und die Ausgabe basierend auf diesen früheren Daten approximieren.

Auf diese Weise wird die Zuverlässigkeit des Systems weiter gesteigert, da die Detektionsschwächen eines einzelnen Verfahrens nicht unmittelbar zu einem fehlerhaften Gesamtergebnis führen. Das System bleibt stabil und kann so lange auf einer fundierten Annäherung basieren, bis die Auswerteverfahren wieder valide und konsistente Ergebnisse liefern. Diese Pufferung über mehrere Zyklen macht es dem System möglich, auch bei kurzfristigen Störungen oder schwankenden Signalqualitäten weiterhin eine hohe Erkennungsgenauigkeit zu gewährleisten und Detektionen unterbrechungsfrei fortzuführen.

Durch diese zyklische Validierung und Ergebnisaggregation wird zudem verhindert, dass Fehlalarme oder fehlerhafte Klassifikationen aufgrund einmaliger Unstimmigkeiten die Sicherheit des Überwachungsbereichs beeinträchtigen. Stattdessen gewährleistet das Verfahren eine stabile und kontinuierliche Überwachung, die sich flexibel an wechselnde Bedingungen anpasst. Die Fähigkeit, Detektionsschwächen temporär zu tolerieren, ohne dabei an Zuverlässigkeit einzubüßen, trägt dazu bei, das System insgesamt robuster und widerstandsfähiger zu gestalten. So kann das Überwachungssystem selbst unter schwierigen Bedingungen sicherheitsrelevante Erkennungsaufgaben kontinuierlich und zuverlässig erfüllen.

In einer weiteren Ausgestaltung kann die Vorrichtung eine Steuereinheit aufweisen, die dazu eingerichtet ist, anhand der Objektliste eine Steuerfunktion der technischen Anlage auszulösen. Insbesondere kann die Steuereinheit dazu eingerichtet sein, für jedes Objekt der Objektliste anhand des multimodalen Sensorsignals einen Abstand zu der technischen Anlage zu bestimmen, den Abstand mit einem Mindestabstand zu vergleichen sowie eine sicherheitsgerichtete Aktion auszulösen, wenn der Abstand eines Objekts der Objektliste den Mindestabstand unterschreitet.

Diese Ausgestaltung verbesserte weiter die Sicherheit und Effektivität der Vorrichtung, insbesondere durch einen dynamisch berechneten Mindestabstand zwischen Person und Roboter. Die dynamische Anpassung des Mindestabstands kann basierend auf der Annäherungsgeschwindigkeit der Person und einem aktuellen Zustand der technischen Anlage, bspw. der aktuellen Geschwindigkeit eines Roboters, bestimmt und gemäß der Norm EN ISO 13855:2023 berechnet werden. Die Fähigkeit, diesen Abstand dynamisch zu gestalten, erhöht die Präzision und Flexibilität der Schutzfunktion, da eine technische Anlage, bspw. ein Roboter, nur dann gestoppt wird, wenn tatsächlich eine sicherheitskritische Annäherung erfolgt. Dies reduziert unnötige Unterbrechungen und optimiert die Betriebszeit der technischen Anlage.

Wenn die Anwesenheit einer Person durch beide Verarbeitungsverfahren bestätigt wird, kann das System den Mindestabstand zuverlässig berechnen und kontinuierlich überwachen. Bei Unterschreitung dieses Mindestabstands erfolgt ein sofortiger Stopp des Roboters, wodurch potenzielle Kollisionen verhindert werden. Die Fähigkeit, die technische Anlage erst dann anzuhalten, wenn der Mindestabstand tatsächlich unterschritten wird, erlaubt einen sicheren und gleichzeitig möglichst ungestörten Ablauf des Anlagenbetriebs.

Falls hingegen nur eines der beiden Verfahren die Anwesenheit einer Person bestätigt, kann ein Prüfprozess eingeleitet werden, um die Erkennungssicherheit zu verbessern. In diesem Fall nutzt das System die Erkenntnisse des erkennenden Verfahrens, um das andere Verfahren durch zusätzliche Trainingsdaten gezielt zu optimieren. Die neuen Daten werden gesammelt und gelabelt und können in zukünftigen manuellen Nachtrainingsprozessen verwendet werden. Dieser Ansatz gewährleistet, dass das System kontinuierlich lernt und sich an spezialisierte Anwendungen oder unerwartete Szenarien anpassen kann, die in den ursprünglichen Trainingsdaten nicht abgebildet waren. Dies verbessert die langfristige Robustheit und Präzision des Systems in verschiedensten Umgebungen.

In einer weiteren Ausbaustufe können zusätzliche Analyseverfahren integriert werden, die die Funktionalität des Gesamtsystems erweitern und die Sicherheit weiter erhöhen. Besonders vorteilhaft ist hierbei die Fähigkeit, nicht nur den gesamten Körper einer Person zu detektieren, sondern auch spezifische Gliedmaßen wie Arme, Beine und Hände. Da der Sicherheitsabstand stark von der Objektauflösung des Überwachungssystems abhängt, ermöglicht die genaue Erfassung einzelner Gliedmaßen eine präzisere Bestimmung des Mindestabstands. Dies ist besonders relevant, wenn beispielsweise Arme oder Hände in Richtung der Gefahrenquelle ausgestreckt sind, was eine unmittelbare Nähe zu gefährlichen Maschinenteilen darstellen kann.

Um diese Erweiterung effizient zu nutzen, kann nach der initialen Erkennung einer Person durch die primären Analyseverfahren ein spezielles Verfahren zur Detektion von Gliedmaßen aktiviert werden. Dieses Verfahren erfasst die genaue Position der Arme oder Hände und passt den Mindestabstand entsprechend an. Dies minimiert das Risiko, dass der Sicherheitsbereich falsch eingeschätzt wird, und erhöht die Sicherheit für Personen, die sich dem Gefahrenbereich nähern.

Zur weiteren Verbesserung der Erkennungsgenauigkeit kann auch hier eine Plausibilitätsprüfung in Form eines Ergebnisvergleichs zwischen dem Gliedmaßenerkennungsverfahren und dem Szenenanalyseverfahren erfolgen. Dieser Abgleich stellt sicher, dass die identifizierten Gliedmaßen korrekt mit der Position und Bewegung der erkannten Person übereinstimmen. Vorteilhaft ist dabei die Integration dieser Gliedmaßendetektion als Modul innerhalb des übergeordneten Verfahrens, wodurch eine kohärente und reibungslose Analyse des Überwachungsbereichs gewährleistet wird.

Eine zusätzliche Ausbaustufe könnte zudem vorsehen, dass die Personenanalyseverfahren bereits in vorgelagerten Bereichen aktiv sind, also in Zonen, die vor dem eigentlichen Schutzraum liegen. Durch diese frühzeitige Erkennung können Personen bereits identifiziert werden, bevor sie den kritischen Überwachungsbereich betreten. Diese Identifikation ermöglicht eine gezielte Zutrittskontrolle, bei der Personen erkannt und ggf. als befugte Bediener oder als Fremdpersonen klassifiziert werden. Dies erlaubt eine automatische Steuerung des Zugangs, indem der Zutritt autorisierten Personen gestattet und unbefugten verwehrt wird.

Sollte das System eine Person nicht erkennen, sei es aufgrund von Fehlerkennung oder weil die Person nicht als bekannt identifiziert wurde, erfolgt eine Warnung durch optische und/oder akustische Signale. Diese Warnung weist die Person darauf hin, dass sie sich dem Überwachungsbereich nähert, ohne dass es dabei sofort zu einer Abschaltung der Anlage kommt. Dadurch wird sichergestellt, dass die technischen Anlagen nur bei echter Gefahr unterbrochen werden und unnötige Betriebsstopps vermieden werden.

In einer weiteren vorteilhaften Ausgestaltung ist es zudem denkbar, die beiden Hauptanalyseverfahren durch weitere Verfahren, die klassische algorithmische Ansätze einsetzen, zu ergänzen. Durch diese Diversität kann eine Ausfallsicherheit weiter erhöht und ein Risiko einer einseitigen Fehleranfälligkeit reduziert werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
Fig. 1 zeigt in einer schematischen Darstellung ein Ausführungsbeispiel der Vorrichtung zur Erfassung von Personen in einem Überwachungsbereich.
Fig. 2 zeigt ein mögliches Anwendungsbeispiel für die Vorrichtung als Sicherheitsüberwachung eines Industrieroboters.
Fig. 3 zeigt in einem Ablaufdiagramm ein Verfahren zur Erfassung von Personen in einem Überwachungsbereich einer technischen Anlage.
Fig. 4 zeigt ein detailliertes Ablaufdiagramm eines bevorzugten Verfahrens zur Erfassung von Personen in einem Überwachungsbereich einer technischen Anlage.

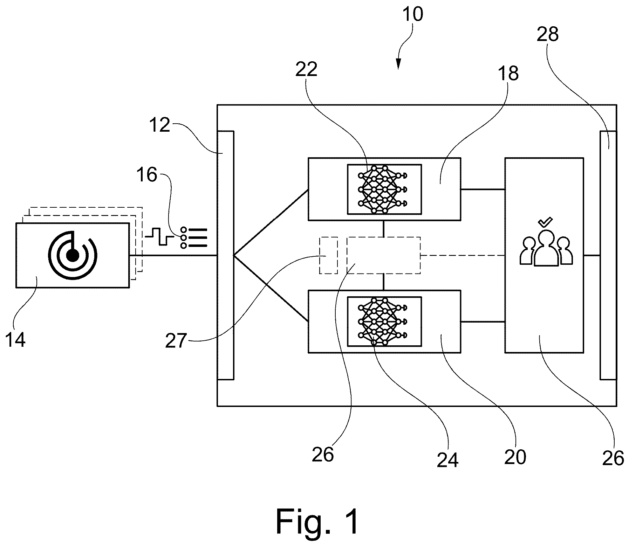

Fig. 1 zeigt in einer schematischen Darstellung ein Ausführungsbeispiel der Vorrichtung zur Erfassung von Personen in einem Überwachungsbereich. Die Vorrichtung ist in ihrer Gesamtheit mit Bezugsziffer 10 bezeichnet.

Die Vorrichtung 10 kann in unterschiedlichen Ausführungsformen realisiert werden, um verschiedene Einsatzszenarien und Anforderungen zu erfüllen. So kann sie als separate Einheit konzipiert sein, die unabhängig von anderen Systemen betrieben wird, oder als Feldbusmodul ausgeführt sein, das direkt in ein bestehendes Kommunikationsnetzwerk integriert wird. Eine weitere Möglichkeit besteht darin, die Vorrichtung als sogenannte "Edgekomponente" zu gestalten, welche Daten lokal verarbeitet und filtert, bevor diese an zentrale Systeme weitergeleitet werden.

Zusätzlich kann die Vorrichtung 10 auch in eine Sicherheitssteuerung integriert werden. Diese Sicherheitssteuerung kann dabei so ausgelegt sein, dass sie verschiedene Applikationen ausführt, die sicherheitskritische Funktionen übernehmen. Beispiele hierfür sind die Überwachung von Maschinenbewegungen, Not-Halt-Funktionen oder die Regelung von Prozessparametern in einer Industrieanlage. Die Integration in eine Sicherheitssteuerung erlaubt es, die Funktionalität der Vorrichtung in bestehende Automatisierungsumgebungen nahtlos einzubinden, ohne dass separate Steuerungseinheiten notwendig sind. Dies trägt zu einer Reduzierung des Installationsaufwands und einer erhöhten Betriebseffizienz bei.

Darüber hinaus kann die Integration auch die Möglichkeit bieten, durch modulare Softwarelösungen unterschiedliche Applikationen flexibel zu implementieren. Diese Flexibilität ermöglicht es, die Vorrichtung an individuelle Kundenanforderungen oder branchenspezifische Vorgaben anzupassen.

Die Vorrichtung 10 ist über eine erste Schnittstelle 12 mit mindestens einem Sensor 14 verbunden. Der Sensor 14 ist hier ein einzelner Sensor. In anderen Ausführungsbeispielen kann die Vorrichtung 10 jedoch auch mit mehreren Sensoren verbunden sein, wie hier durch die gestrichelten Blöcke hinter dem Sensor 14 angedeutet ist.

Der Sensor 14 ist ein smarter Sensor bzw. ein Multifunktionssensoren. Unter smarten Sensoren im Bereich der industriellen Automatisierungstechnik versteht man Sensoren, die über erweiterte Funktionalitäten verfügen und in der Lage sind, nicht nur Daten zu erfassen, sondern diese auch zu verarbeiten und zu analysieren. Diese Sensoren sind mit integrierter Elektronik und Software ausgestattet, die es ihnen ermöglicht, komplexe Aufgaben zu übernehmen. Sie können beispielsweise Daten vorverarbeiten, Fehler erkennen, Kalibrierungen durchführen und sogar Entscheidungen treffen. Als Multisensoren oder Multifunktionssensoren werden Sensoren bezeichnet, die mehrere verschiedene Sensordaten liefern können. Diese Sensoren sind in der Lage, nicht nur eine einzelne Eigenschaft zu erfassen, sondern mehrere unterschiedliche Parameter gleichzeitig zu messen und zu übermitteln. Ein Beispiel hierfür sind Radarsensoren, die nicht nur die Anwesenheit eines Gegenstands erkennen, sondern auch dessen Entfernung, Geschwindigkeit, Größe und andere Eigenschaften bestimmen können. Multisensoren bieten den Vorteil, dass sie eine umfassendere und detailliertere Datenerfassung ermöglichen, was zu einer präziseren Analyse und besseren Entscheidungsfindung führt. Sie sind besonders nützlich in Anwendungen, bei denen eine Vielzahl von Informationen benötigt wird, um komplexe Prozesse zu steuern oder zu überwachen. Üblicherweise sind smarte Sensoren gleichzeitig Multifunktionssensoren und umgekehrt.

Im vorliegenden Ausführungsbeispiel ist als smarter Sensor bzw. Multifunktionssensor ein Radarsensor, insbesondere ein MIMO-Radarsensor, dargestellt. Der Sensor 14 erfasst einen Überwachungsbereich an einer technischen Anlage (hier nicht dargestellt) und liefert an die Vorrichtung 10 ein multimodales Sensorsignal 16.

Ein multimodales Sensorsignal 16 bezeichnet ein Signal, das verschiedene Arten von Messgrößen und Messwerten für eine bestimmte Aufnahme eines Erfassungsbereichs enthält. Dies bedeutet, dass das Sensorsignal Informationen aus mehreren Modalitäten kombiniert, also aus unterschiedlichen physikalischen oder sensorischen Perspektiven, um ein umfassenderes Bild des Erfassungsbereichs oder einzelner Objekte in diesem Bereich zu liefern. Ein multimodales Sensorsignal kann beispielsweise die Kombination verschiedener Datenströme umfassen, die aus unterschiedlichen sensorischen Quellen stammen oder auf verschiedenen physikalischen Prinzipien basieren.

Ein multimodales Sensorsignal 16 eines Radarsensors beispielsweise kombiniert verschiedene Arten von Messgrößen und Messwerten, um ein umfassendes Bild des Erfassungsbereichs zu liefern. Ein solcher Radarsensor kann beispielsweise nicht nur die Entfernung und Geschwindigkeit von Objekten messen, sondern auch deren Winkelposition, Größe und Materialeigenschaften erfassen. Diese verschiedenen Modalitäten ermöglichen eine detaillierte und genaue Darstellung der Umgebung. So könnte ein Radarsensor, der ein multimodales Sensorsignal 16 liefert, zunächst die Entfernung zu einem Objekt durch die Messung der Laufzeit des reflektierten Radarsignals bestimmen. Gleichzeitig könnte er die Geschwindigkeit des Objekts durch die Analyse der Doppler-Verschiebung des reflektierten Signals ermitteln. Zusätzlich könnte der Sensor die Winkelposition des Objekts durch die Verwendung von Phased-Array-Antennen oder anderen Richtungsfindungstechniken bestimmen.

Darüber hinaus könnte der Radarsensor auch die Größe und Form des Objekts durch die Analyse der reflektierten Signalstärke und -muster erfassen. Dies könnte durch die Verwendung von Hochfrequenz-Radarsignalen erreicht werden, die feinere Details der Objektoberfläche auflösen können. Zudem könnte der Sensor Materialeigenschaften des Objekts durch die Analyse der Dielektrizitätskonstante und anderer elektromagnetischer Eigenschaften bestimmen, die aus den reflektierten Signalen abgeleitet werden können. Die Kombination dieser verschiedenen Modalitäten in einem multimodalen Sensorsignal ermöglicht es dem Radarsensor, ein umfassendes und detailliertes Bild des Erfassungsbereichs zu liefern.

Bei einem kamerabasierten Sensor könnte das multimodale Sensorsignal 16 hingegen verschiedene visuelle und nicht-visuelle Informationen kombinieren, um ein umfassendes Bild des Erfassungsbereichs zu liefern. Neben der Erfassung von sichtbarem Licht könnte der Sensor auch Infrarotbilder aufnehmen, um Temperaturunterschiede zu erkennen, was besonders nützlich ist, um Wärmequellen oder kalte Bereiche zu identifizieren. Zusätzlich könnte der Sensor Tiefeninformationen durch den Einsatz von Stereokameras oder Timeof-Flight-Techniken erfassen, um die dreidimensionale Struktur der Umgebung zu bestimmen. Weiterhin könnte der Sensor spektrale Informationen durch den Einsatz von Hyperspektralkameras erfassen, die detaillierte Informationen über die chemische Zusammensetzung und Materialeigenschaften der erfassten Objekte liefern. Durch die Kombination dieser verschiedenen Modalitäten kann der kamerabasierte Sensor ein detailliertes und vielschichtiges Bild der Umgebung liefern, das sowohl visuelle als auch nicht-visuelle Informationen umfasst, was zu einer präziseren Analyse und besseren Entscheidungsfindung führt.

Unabhängig davon, wie das multimodale Sensorsignal 16 des Sensors 14 ausgebildetes, wird dieses von der Vorrichtung 10 über die erste Schnittstelle 12 aufgenommen. Die erste Schnittstelle 12 kann eine IP-basierte Schnittstelle sein, die auf dem Internetprotokoll (IP) basiert. Eine solche Schnittstelle ermöglicht die Übertragung von Daten über ein Netzwerk, sei es ein lokales Netzwerk (LAN) oder ein weitreichendes Netzwerk (WAN), einschließlich des Internets. Durch die Nutzung von IP-basierten Protokollen wie TCP/IP oder UDP können die Sensordaten in Echtzeit übertragen werden, was eine schnelle und zuverlässige Kommunikation zwischen dem Sensor und der Empfängervorrichtung gewährleistet. Alternativ kann für die Übertragung multimodaler Sensorsignale 16 auch eine OPC-UA-Schnittstelle (Open Platform Communications Unified Architecture) verwendet werden. OPC-UA ist ein industrieller Kommunikationsstandard, der speziell für die Automatisierungstechnik entwickelt wurde. Diese Schnittstelle bietet eine plattformunabhängige und sichere Methode zur Datenübertragung und -verwaltung. OPC-UA unterstützt nicht nur die Übertragung von Echtzeitdaten, sondern auch die Integration von historischen Daten und Ereignissen. Darüber hinaus bietet OPC-UA erweiterte Sicherheitsfunktionen wie Verschlüsselung und Authentifizierung, um die Integrität und Vertraulichkeit der übertragenen Daten zu gewährleisten.

Die Wahl der Schnittstelle hängt von den spezifischen Anforderungen der Anwendung ab. IP-basierte Schnittstellen sind oft flexibler und einfacher zu implementieren, insbesondere in Umgebungen, die bereits über eine bestehende Netzwerkinfrastruktur verfügen. OPC-UA-Schnittstellen hingegen bieten zusätzliche Vorteile in Bezug auf Sicherheit, Interoperabilität und erweiterte Datenmanagementfunktionen, was sie besonders geeignet für industrielle Anwendungen macht, bei denen Zuverlässigkeit und Datensicherheit von entscheidender Bedeutung sind. Es versteht sich, dass die erste Schnittstelle 12 nicht auf eine der beiden genannten Schnittstellen beschränkt ist, sondern auch andere Schnittstellen, beispielsweise proprietäre Lösung, infrage kommen, um die multimodalen Sensordaten 16 an die Vorrichtung 10 zu übertragen.

Für die Verarbeitung des multimodalen Sensorsignals 16 verfügt die Vorrichtung 10 über zwei getrennte Verarbeitungskanäle, einen ersten Verarbeitungskanal 18 und einen zweiten Verarbeitungskanal 20. Die beiden Verarbeitungskanäle 18, 20 sind auf die Verarbeitung des multimodalen Sensorsignals 16 spezialisiert, verfolgen jedoch unterschiedliche Ansätze, um eine Detektion von Personen in dem Überwachungsbereich der technischen Anlage sicherzustellen.

Der erste Verarbeitungskanal 18 basiert auf einem ersten trainierten neuronalen Netz 22, das beispielsweise speziell auf die räumliche Analyse von Punktwolken ausgerichtet sein kann, um Konturen von Objekten zu erkennen und Personen anhand charakteristischer Merkmale zu identifizieren. Dieses Verfahren kann die geometrischen und strukturellen Eigenschaften des multimodalen Sensorsignals 16 nutzen, um präzise Personenerkennungen durchzuführen.

Der zweite Verarbeitungskanal 20 verwendet ein anderes trainiertes neuronales Netz 24, das sich bspw. auf die Frequenzanalyse des Sensorsignals konzentriert. Das Netz 24 kann darauf trainiert sein, subtile Mikrobewegungen, wie Herzschlag oder Atmung, zu detektieren, die für Menschen charakteristisch sind. Dieses Verfahren ermöglicht es, Personen auch in Szenarien zu identifizieren, in denen sie statisch sind oder verdeckt werden, da es auf physiologische Signaturen zurückgreift.

Beide Verarbeitungskanäle 18, 20 arbeiten parallel auf derselben Datenbasis, verwenden jedoch diversitär verschiedene Methoden, um die Robustheit und Zuverlässigkeit der Personenerkennung zu gewährleisten. Diese Kombination der Verfahren ermöglicht eine präzise und sichere Überwachung des Überwachungsbereichs, selbst unter variierenden oder komplexen Bedingungen.

Neben der Konturerkennung und der Spektralanalyse können in den Verarbeitungskanälen der Vorrichtung auch andere KI-basierte Ansätze eingesetzt werden, um die Diversität der Personenerkennung zu erhöhen. Beispielsweise könnten neuronale Netze genutzt werden, die auf Bewegungsmuster spezialisiert sind und dynamische Verhaltensweisen von Personen analysieren. Ein weiteres Verfahren könnte auf der Analyse thermografischer Daten basieren, bei der Wärmeprofile zur Unterscheidung von Personen und Objekten herangezogen werden. Auch die Verarbeitung akustischer Signaturen durch KI-Systeme, die Geräusche oder Sprache erkennen und klassifizieren, könnte ergänzend eingesetzt werden. Diese unterschiedlichen Ansätze erlauben es, die Erkennungsgenauigkeit weiter zu steigern und eine robuste, diversitäre Auswertung sicherzustellen.

Die Ergebnisse der beiden Verarbeitungskanäle 18, 20 werden einer Validierungseinheit 26 bereitgestellt. Die Validierungseinheit 26 ist so konzipiert, dass sie die Erfassungsergebnisse der beiden Verarbeitungskanäle miteinander vergleicht, um die Konsistenz zu prüfen und mögliche Fehler zu minimieren. Dazu kann die Einheit verschiedene Komponenten und Algorithmen enthalten, die eine präzise Validierung ermöglichen.

Ein möglicher Aufbau könnte eine Vergleichslogik umfassen, die auf regelbasierten Methoden aufbaut, beispielsweise eine Schwellenwertanalyse, bei der die Ergebnisse der beiden Verarbeitungskanäle 18, 20 auf Übereinstimmung geprüft werden. Weichen die Ergebnisse nur geringfügig voneinander ab, könnte die Validierungseinheit 26 diese Abweichungen tolerieren, während bei größeren Differenzen ein Hinweis auf potenzielle Fehler generiert wird.

Darüber hinaus könnte die Validierungseinheit 26 auf maschinellem Lernen basieren, um inkonsistente oder fehlerhafte Erkennungsergebnisse zu identifizieren. Beispielsweise könnte ein zusätzliches neuronales Netz integriert sein, das auf den Vergleich der Ergebnisse der beiden Verarbeitungskanäle 18, 20 trainiert wurde. Dieses Netz könnte Muster in den Abweichungen erkennen und basierend darauf Entscheidungen treffen, ob die Ergebnisse plausibel sind oder nicht.

Ein weiteres Beispiel für den Aufbau der Validierungseinheit 26 ist die Verwendung von Fusionsalgorithmen, die die Ergebnisse der Verarbeitungskanäle 26 gewichten und ein Gesamtresultat berechnen. Dabei könnten Algorithmen wie Bayes'sche Netze oder Entscheidungsbäume zum Einsatz kommen, die sowohl die Ergebnisse als auch die Wahrscheinlichkeiten der Erkennungen berücksichtigen.

Zusätzlich kann die Validierungseinheit 26 Mechanismen enthalten, die historische Daten und Ergebnisse vorheriger Validierungen, die bspw. in einem Speicher 27 der Vorrichtung 10 hinterlegt sein können, nutzen, um Entscheidungen zu optimieren. Ein Beispiel wäre ein Feedback-Mechanismus, bei dem erkannte Fehler zur Verbesserung zukünftiger Validierungen beitragen, etwa durch Anpassung der Gewichtungen oder Schwellenwerte.

Die Vorrichtung kann zusätzlich zur ersten Schnittstelle 12 eine zweite Schnittstelle 28 umfassen, über die die Ergebnisse der Validierungseinheit 26 bereitgestellt werden. Diese Schnittstelle 28 ermöglicht es, die validierten Erfassungsergebnisse für nachgelagerte Prozesse oder Systeme zugänglich zu machen. Insbesondere kann diese Schnittstelle 28 dazu genutzt werden, Steuerfunktionen der technischen Anlage auszulösen, wobei ein besonderer Fokus auf sicherheitsgerichteten Steuerfunktionen liegt.

Mittels der zweiten Schnittstelle 28 kann die Vorrichtung 10 beispielsweise bei der Detektion einer Person im Überwachungsbereich unmittelbar sicherheitsrelevante Aktionen initiieren. Dies könnte die Auslösung eines Notstopps, die Aktivierung von Warnsignalen oder die Reduktion der Geschwindigkeit einer Maschine umfassen, um potenzielle Gefährdungen zu vermeiden. Die Steuerung erfolgt dabei auf Basis der validierten Ergebnisse, wodurch Fehlalarme oder fehlerhafte Reaktionen minimiert werden. Ein solche Schnittstelle 28 wird in der Sicherheitstechnik auch als sichere Ausgang oder Sicherheitsausgang bezeichnet.

Darüber hinaus kann die zweite Schnittstelle 28 so ausgestaltet sein, dass sie nicht nur binäre Steuerbefehle übermittelt, sondern auch kontinuierliche Daten, wie Wahrscheinlichkeitswerte oder Klassifizierungsergebnisse. Diese Daten können von einem Steuersystem der technischen Anlage genutzt werden, um adaptive Schutzmaßnahmen einzuleiten, etwa die dynamische Anpassung eines Sicherheitsabstands. Die Verwendung der validierten Ergebnisse gewährleistet dabei eine hohe Zuverlässigkeit und Genauigkeit, was für sicherheitskritische Anwendungen von zentraler Bedeutung ist.

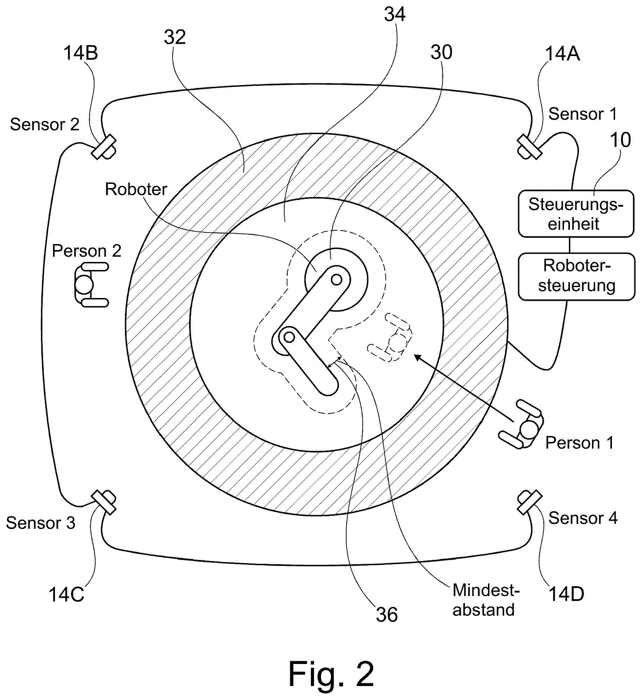

Mit Bezug auf Fig. 2 wird im Folgenden ein konkretes Anwendungsbeispiel für die zuvor beschriebene Vorrichtung 10 beschrieben. Fig. 2 zeigt ein Anwendungsbeispiel für die Sicherheitsüberwachung eines Industrieroboters 30, bei dem mehrere Radarsensoren 14 eingesetzt werden, um die Umgebung des Roboters 30 vollständig zu erfassen. In der Mitte des Überwachungsbereichs befindet sich der Roboter 30, der in einem schraffierten Sicherheitsbereich 32 agiert. Um diesen Sicherheitsbereich 32 herum sind vier Sensoren 14A, 14B, 14C, 14D angeordnet, die so platziert sind, dass alle Zugangsbereiche zum Roboter 30 lückenlos überwacht werden können.

Im dargestellten Szenario befinden sich zwei Personen in der Nähe des Roboters 30. Person 1 hat den schraffierten Sicherheitsbereich 32 betreten, der als eine Zone definiert ist, in der der Roboter 30 seine Geschwindigkeit reduziert, anstatt anzuhalten. Die Positionen des Roboters 30 und der Person werden durch die Vorrichtung 10 kontinuierlich überwacht und verfolgt. Anders als bei herkömmlichen Systemen, bei denen der Roboter automatisch stoppt, sobald eine Person den inneren weißen Bereich 34 betritt, berechnet das in der Vorrichtung 10 implementierte System zyklisch den Mindestabstand 36 zwischen Roboter und Person. Ein Stopp des Roboters 30 erfolgt erst, wenn dieser Mindestabstand - in der Abbildung durch eine schraffierte Linie um den Roboter angedeutet - unterschritten wird. Solange der Mindestabstand 36 nicht unterschritten ist, setzt der Roboter 30 seine Arbeit mit reduzierter Geschwindigkeit fort, was eine höhere Produktivität und eine engere Zusammenarbeit zwischen Mensch und Roboter ermöglicht.

Die zweite Person (Person 2) befindet sich noch außerhalb des schraffierten Bereichs. Da der Roboter bereits mit reduzierter Geschwindigkeit arbeitet, werden keine weiteren Maßnahmen ergriffen, solange der Mindestabstand 36 auch bei dieser Person eingehalten wird. Das System ermöglicht so eine flexible Anpassung an mehrere Personen im Überwachungsbereich. Sobald beide Personen den äußeren schraffierten Bereich verlassen haben und keine weiteren Objekte oder Personen detektiert werden, kehrt der Roboter 30 in den normalen Betriebsmodus mit unverminderter Geschwindigkeit zurück, ohne dass eine manuelle Bestätigung erforderlich ist.

Die von der Vorrichtung 10 bereitgestellte Personenerkennung bietet hierbei mehrere Vorteile im Vergleich zu herkömmlichen Überwachungssystemen. Durch die präzise und kontinuierliche Erfassung der Positionen von Personen und des Roboters 30 wird eine dynamische Sicherheitsüberwachung ermöglicht, die über bloße Ein/Aus-Reaktionen hinausgeht. Statt den Roboter 30 bei Annäherung einer Person sofort anzuhalten, erlaubt das System eine schrittweise Reduzierung der Geschwindigkeit, solange der Mindestabstand 36 eingehalten wird. Dies steigert die Produktivität, da der Roboter 30 seine Aufgaben mit angepasster Geschwindigkeit weiter ausführen kann, anstatt durchgehend anzuhalten.

Ein weiterer Vorteil liegt in der höheren Flexibilität und Anpassungsfähigkeit des Systems. Da die Personenerkennung auf diversitären Verfahren basiert, wie beispielsweise Konturerkennung und Spektralanalyse, kann das System Personen auch unter herausfordernden Bedingungen präzise identifizieren und deren Position zuverlässig bestimmen. Diese robusten Erkennungsverfahren gewährleisten eine zuverlässige Überwachung, auch wenn sich mehrere Personen im Überwachungsbereich befinden oder die Personen teilweise verdeckt sind. Dies erhöht die Sicherheit, da potenzielle Gefahren frühzeitig erkannt werden können und entsprechend darauf reagiert werden kann.

Zusätzlich wird die Zusammenarbeit zwischen Mensch und Roboter durch diese adaptive Sicherheitslösung erleichtert. Die dynamische Berechnung des Mindestabstands 36 und die flexible Anpassung der Robotergeschwindigkeit ermöglichen eine enge Kooperation, ohne das Sicherheitsrisiko zu erhöhen. Sobald der Überwachungsbereich frei von Personen ist, kann der Roboter automatisch zur vollen Geschwindigkeit zurückkehren, was unnötige Wartezeiten und manuelle Bestätigungen vermeidet und den Arbeitsfluss optimiert.

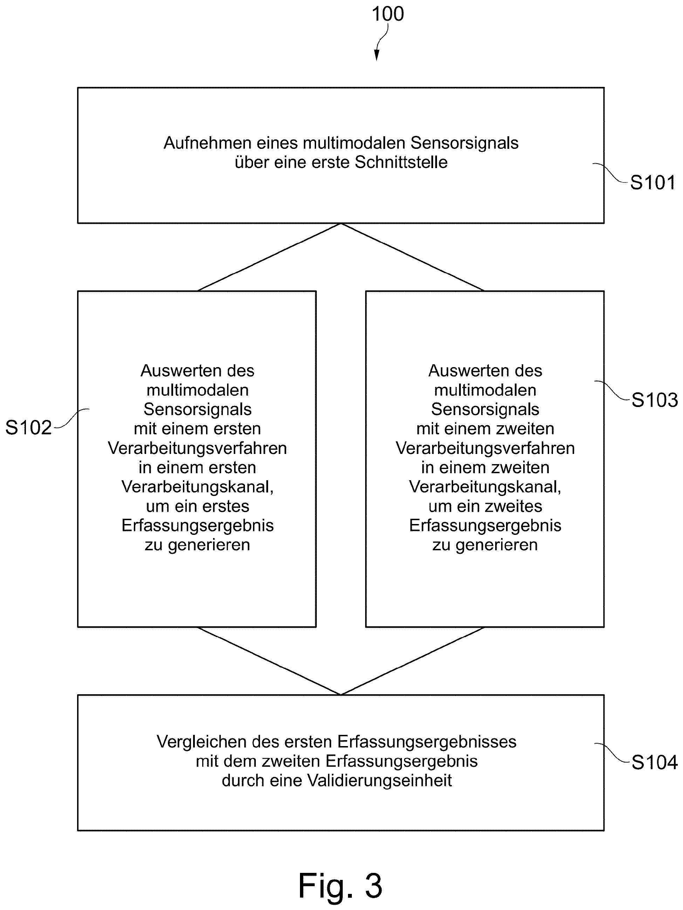

Fig. 3 veranschaulicht ein Verfahren zur Erfassung von Personen in einem Überwachungsbereich einer technischen Anlage, das in mehreren aufeinander abgestimmten Schritten abläuft. Zunächst wird in einem ersten Schritt (S101) über eine erste Schnittstelle ein multimodales Sensorsignal von einem oder mehreren Sensoren aufgenommen. Dieses Signal umfasst verschiedene physikalische Messgrößen und Daten, die eine umfassende Darstellung der Umgebung ermöglichen.

Nach der Aufnahme des Signals kann eine Vorverarbeitung erfolgen, bei der statische Cluster, wie unbewegliche Objekte im Überwachungsbereich, entfernt werden. Dadurch kann sichergestellt werden, dass nur relevante dynamische Objekte in den folgenden Verarbeitungsstufen berücksichtigt werden. Anschließend wird das bereinigte Sensorsignal parallel in zwei getrennten Verarbeitungskanälen analysiert.

Im ersten Verarbeitungskanal wird das Signal durch ein erstes trainiertes neuronales Netz ausgewertet (S102). Das erste trainierte neuronale Netz kann speziell auf eine Punktwolkenanalyse ausgerichtet sein. Dieses Verfahren erstellt eine dreidimensionale Punktwolke, die die räumliche Verteilung und Konturen der Objekte im Überwachungsbereich beschreibt. Mithilfe dieses Ansatzes können geometrische und strukturelle Merkmale extrahiert werden, um Personen anhand charakteristischer Merkmale wie Körperform oder Umrisse zu identifizieren.

Parallel dazu verarbeitet der zweite Verarbeitungskanal das Sensorsignal mit einem weiteren trainierten neuronalen Netz (S103). Das zweite trainierte neuronale Netz kann auf eine Frequenzanalyse spezialisiert sein. Hierbei werden Frequenzmuster, die durch Bewegungen oder vitale Zeichen entstehen, untersucht. Mittels Spektralanalyse werden dabei charakteristische Signaturen wie Herzschlag- und Atemfrequenzen, die Menschen von anderen Objekten unterscheiden, identifiziert. Diese Methode erlaubt eine präzise Detektion von Personen, auch wenn diese statisch sind oder verdeckt werden.

Die Ergebnisse beider Verarbeitungskanäle werden anschließend in einer Validierungseinheit zusammengeführt und miteinander verglichen (S104). In der Validierungseinheit werden die Konsistenz und Plausibilität der Erkennungsergebnisse überprüft. Stimmen die Ergebnisse beider Kanäle überein, wird das Zielobjekt als Person klassifiziert. Bei Abweichungen kann die Validierungseinheit Rückschlüsse auf potenzielle Fehler ziehen oder Maßnahmen zur Optimierung der Verarbeitung einleiten, wie etwa die Nachjustierung von Schwellenwerten oder die Sammlung neuer Trainingsdaten für die neuronalen Netze.

Ergänzend kann bei erfolgreicher Validierung eine Berechnung des Abstands zwischen den erkannten Personen und der technischen Anlage erfolgen. Dieser Mindestabstand kann kontinuierlich überwacht und dynamisch angepasst werden, basierend auf der Annäherungsgeschwindigkeit der Person und den Betriebsparametern der Anlage, wie etwa der Geschwindigkeit eines Roboters. Wird der Mindestabstand unterschritten, kann eine sicherheitsgerichtete Aktion ausgelöst werden, wie das Stoppen der Maschine oder die Reduzierung ihrer Geschwindigkeit.

Vorzugsweise wird das gesamte Verfahren in zyklischen Abläufen durchgeführt, wodurch eine kontinuierliche Verfolgung der Objekte sowie eine flexible Anpassung an wechselnde Bedingungen gewährleistet wird. Der iterative Prozess ermöglicht eine fehlertolerante und zuverlässige Personenerkennung, selbst in komplexen und dynamischen Überwachungsbereichen.

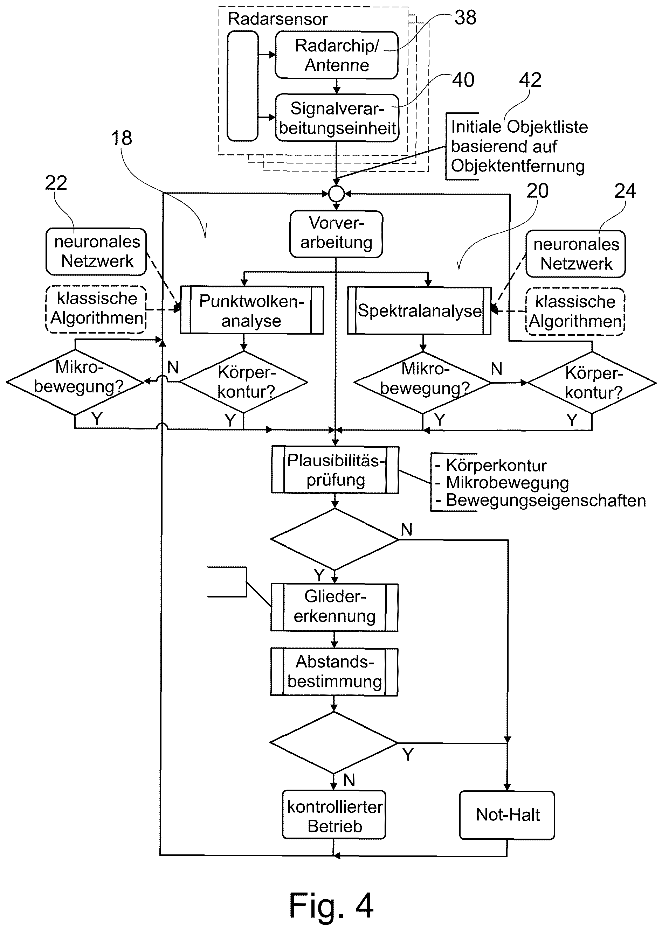

Fig. 4 zeigt ein detailliertes Ablaufdiagramm eines bevorzugten Verfahrens zur Erfassung von Personen in einem Überwachungsbereich einer technischen Anlage.

Dargestellt sind hier exemplarisch drei Radarsensoren 14, die dazu eingerichtet sind, ein multimodales Sensorsignal bereitzustellen. Die Radarsensoren verfügen über Radarchips und Antennen 38 sowie über eine eigene Signalverarbeitungseinheit 40. Die Signalverarbeitungseinheiten 40 der Radarsensoren können eine initiale Objektliste 42 bereitstellen, die beispielsweise für jedes Objekt Entfernung, Winkel und Geschwindigkeit beinhaltet. Die initiale Objektliste 42 kann Bestandteil des multimodalen Sensorsignals sein.

Anschließend erfolgt hier eine Vorverarbeitung der initialen Objektliste 42, bei der statische Cluster, wie unbewegliche Objekte aus der initialen Objektliste 42, entfernt werden.

Nach der Verarbeitung wird das multimodales Sensorsignal in zwei voneinander getrennten Verarbeitungskanälen 18, 20 bearbeitet. In beiden Verarbeitungskanälen wird jeweils ein trainiertes neuronales Netz 22, 24 für die Datenverarbeitung eingesetzt. Ergänzend können auch weitere klassische Datenverarbeitungsverfahren 44, wie Logikauswertungen und Entscheidungsbäume, in den Verarbeitungskanälen 18, 20 eingesetzt werden.

Im ersten Verarbeitungskanal 18 wird hier eine Punktwolkenanalyse durchgeführt, anhand derer für jedes Objekt der Objektliste versucht wird, eine menschenähnliche Kontur zu erfassen. In dem zweiten Verarbeitungskanal 20 wird eine Spektralanalyse durchgeführt, anhand derer für jedes Objekt der Objektliste versucht wird, eine Mikrobewegung zu detektieren. Die Ergebnisse dieser Analysen werden anschließend in einer Validierungseinheit einem Plausibilitätscheck unterzogen. Gleichzeitig werden die Ergebnisse der einzelnen Kanäle korreliert und zurückgekoppelt.

Bei der Plausibilitätsprüfung werden die Ergebnisse beider Kanäle verglichen, um eine zuverlässige Klassifikation der Objekte zu gewährleisten. Wenn beide Kanäle die Klassifikation als Mensch bestätigen, wird das Ziel als Person erkannt und verbleibt in einer finalen Zielauflistung. Diese Liste kann Angaben zur Position des Ziels in den radialen und azimutalen Dimensionen sowie dessen Geschwindigkeit und einen Wahrscheinlichkeitswert für die Klassifikation als Mensch beinhalten. Die Zielobjekte werden basierend auf ihrer Entfernung zur Sicherheitszone und ihrem Klassifikationswert sortiert, sodass das System entsprechend priorisieren kann.

Falls die Anwesenheit einer Person nur durch eine der beiden Verarbeitungsketten bestätigt wird, führt das System zusätzliche Prüfungen durch, um die Genauigkeit zu verbessern. Dabei können Erkenntnisse aus dem detektierenden Verfahren zur Nachschulung des anderen Verfahrens genutzt werden, um das System langfristig robuster und zuverlässiger zu machen. Schlägt der Vergleich jedoch vollständig fehl, wird unmittelbar eine sicherheitsgerichtete Aktion ausgelöst, wie beispielsweise das Stoppen der technischen Anlage, um eine mögliche Gefahr zu vermeiden.

Dieser gesamte Prozess wird in Zyklen wiederholt, um eine kontinuierliche Überwachung und Verfolgung der Personen im Gefahrenbereich sicherzustellen.

Darüber hinaus können die beschriebenen Analyseverfahren durch die Nutzung erweiterter algorithmischer Ansätze ergänzt werden, um die Zuverlässigkeit und Flexibilität des Systems weiter zu steigern. Ein möglicher Ansatz ist die Verwendung von Algorithmen, die spezifische Bewegungsmuster analysieren. Durch die Auswertung des Dopplereffekts, der durch die Bewegung von Gliedmaßen wie schwingenden Armen und Beinen erzeugt wird, können charakteristische Geschwindigkeitsprofile identifiziert werden, die auf sich bewegende Personen hinweisen. Diese Profile sind besonders wertvoll in dynamischen Überwachungsszenarien, da sie eine Unterscheidung zwischen Personen und anderen beweglichen Objekten ermöglichen.

Ein weiterer Erweiterungsansatz betrifft die Integration zusätzlicher Modalitäten, wie akustische oder thermografische Daten, um die Robustheit der Personenerkennung zu erhöhen. Akustische Sensoren könnten beispielsweise Schritte oder Sprachsignale erkennen und analysieren, während thermografische Sensoren Wärmeprofile erfassen, die charakteristisch für den menschlichen Körper sind. Die Kombination solcher Modalitäten mit den bestehenden Analyseverfahren kann die Vielseitigkeit und Präzision des Systems weiter verbessern.

Auch die Erweiterung des Systems um Machine-Learning-Modelle, die kontinuierlich aus Echtzeitdaten lernen, bietet Vorteile. Diese Modelle könnten durch Online-Learning-Techniken trainiert werden, die es ermöglichen, das System in Echtzeit an neue Szenarien und Variationen anzupassen. Beispielsweise könnte das System lernen, atypische Bewegungsmuster oder seltene Konstellationen zu erkennen, die in den ursprünglichen Trainingsdaten nicht berücksichtigt wurden. Solche Lernprozesse könnten auf einer Rücckopplungsschleife basieren, bei der erkannte Abweichungen und Unsicherheiten automatisch in den Trainingsdatensatz aufgenommen werden.

Jedoch ist zu beachten, dass "automatisiertes Lernen" insbesondere bei funktional sicheren Systemen kontrovers diskutiert wird und in Normungsgremien Gegenstand intensiver Diskussionen ist. Eine alternative Herangehensweise könnte darin bestehen, die im laufenden Betrieb erhobenen Daten über Clouddienste an den Hersteller zu übermitteln. Der Hersteller könnte diese Daten in die Trainingsdaten integrieren, um das Modell weiterzuentwickeln und zu optimieren. Beim nächsten Produktupdate könnte das verbesserte Modell dem Anwender in einer kontrollierten und validierten Form zur Verfügung gestellt werden, wodurch die Anforderungen an die funktionale Sicherheit besser berücksichtigt werden können.

Ein weiterer Ansatz zur Verbesserung der Erkennungsgenauigkeit ist die Integration von Multi-Agentensystemen, bei denen mehrere Sensoren und Verarbeitungseinheiten parallel arbeiten und ihre Ergebnisse in einer zentralen Fusions- und Entscheidungslogik zusammengeführt werden. Dieses Konzept ermöglicht es, Redundanzen aufzubauen und die Zuverlässigkeit des Gesamtsystems zu erhöhen, selbst wenn einzelne Komponenten ausfallen oder fehlerhafte Ergebnisse liefern.

Die Einbindung von Technologien zur semantischen Szenenanalyse stellt eine weitere Möglichkeit dar, das System zu erweitern. Durch die Interpretation von Szenen in einem semantischen Kontext könnte das System beispielsweise zwischen typischen und untypischen Verhaltensweisen unterscheiden und somit potenziell gefährliche Situationen früher erkennen. Dies könnte durch die Erkennung von ungewöhnlichen Bewegungen oder Positionen innerhalb des Überwachungsbereichs erfolgen, wie etwa das plötzliche Stolpern oder Hinfallen einer Person.

In Kombination mit erweiterten Steuerungslogiken könnte das System zudem prädiktive Funktionen übernehmen, bei denen potenzielle Gefährdungen bereits vor ihrer tatsächlichen Entstehung erkannt werden. Dies würde dem System ermöglichen, proaktiv zu reagieren, beispielsweise durch die frühzeitige Aktivierung von Warnsignalen oder die Anpassung der Geschwindigkeit technischer Anlagen, bevor eine Person tatsächlich in den Gefahrenbereich gelangt.

Die beschriebenen Erweiterungen und zusätzlichen Funktionalitäten sind nahtlos mit der beanspruchten Lösung kombinierbar, sodass das System flexibel an spezifische Anforderungen und Einsatzszenarien angepasst werden kann. Die modulare Architektur ermöglicht es, die vorgeschlagenen Ergänzungen sowohl einzeln als auch in beliebigen Kombinationen in die bestehende Lösung zu integrieren.

Es wird ferner darauf hingewiesen, dass die vorstehenden Ausführungsbeispiele lediglich exemplarischer Natur sind und keine abschließende Darstellung der Möglichkeiten bieten. Vielmehr steht es dem Fachmann offen, Variationen und Anpassungen einzelner Komponenten vorzunehmen, um spezifische Anforderungen zu erfüllen oder alternative technische Lösungen zu realisieren. So können beispielsweise alternative Sensortypen, unterschiedliche Verarbeitungsverfahren oder zusätzliche Sicherheitsmechanismen eingesetzt werden, ohne den Kern der Erfindung zu verlassen.

Der Schutzumfang der vorliegenden Erfindung wird ausschließlich durch die nachfolgenden Ansprüche definiert. Die Beschreibung und die Figuren dienen lediglich der Veranschaulichung der Erfindung und stellen keine Beschränkung dar. Jegliche Ausgestaltungen und Kombinationen, die von den Merkmalen der Ansprüche gedeckt sind, fallen daher in den Schutzbereich der Erfindung, unabhängig davon, ob sie in der Beschreibung oder den Figuren explizit erwähnt wurden.

### Bezugszeichenliste

- 10: Vorrichtung
- 12: erste Schnittstelle
- 14: Sensor (smarter Sensor bzw. Multifunktionssensor)
- 16: multimodales Sensorsignal
- 18: erster Verarbeitungskanal
- 20: zweiter Verarbeitungskanal
- 22: erstes trainiertes neuronales Netz
- 24: zweites trainiertes neuronales Netz
- 26: Validierungseinheit
- 28: zweite Schnittstelle
- 30: Roboter
- 32: Sicherheitsbereich
- 34: innerer Sicherheitsbereich
- 36: Mindestabstand
- 38: Radarchip/Antennen
- 40: Signalverarbeitungseinheit
- 42: initiale Objektliste

## Patentansprüche

1. Vorrichtung (10) zur Erfassung von Personen in einem Überwachungsbereich einer technischen Anlage, aufweisend:
eine erste Schnittstelle (12) zur Aufnahme eines multimodalen Sensorsignals (16),
einen ersten Verarbeitungskanal (18), der dazu eingerichtet ist, das multimodale Sensorsignal (16) gemäß einem ersten Verarbeitungsverfahren auszuwerten, um ein erstes Erfassungsergebnis zu generieren,
einen zweiten Verarbeitungskanal (20), der dazu eingerichtet ist, das multimodale Sensorsignal (16) gemäß einem zweiten Verarbeitungsverfahren auszuwerten, um ein zweites Erfassungsergebnis zu generieren, sowie
eine Validierungseinheit (26), die da dazu eingerichtet ist, das erste Erfassungsergebnis und das zweite Erfassungsergebnis miteinander zu vergleichen,
**dadurch gekennzeichnet, dass**
das erste Verarbeitungsverfahren auf einem ersten trainierten neuronalen Netz (22) basiert und das zweite Verarbeitungsverfahren auf einem zweiten trainierten neuronalen Netz (24) basiert und das erste Verarbeitungsverfahren und das zweite Verarbeitungsverfahren diversitär verschieden voneinander sind.

2. Vorrichtung nach Anspruch 1, wobei das multimodale Sensorsignal (16) ein digitales Datensignal ist, das eine Vielzahl von physikalischen Messgrößen beinhaltet, die eine oder mehrere Eigenschaften eines oder mehrerer Objekte in dem Überwachungsbereich repräsentieren.

3. Vorrichtung nach Anspruch 2, wobei die Eigenschaften eine Objektentfernung, eine Geschwindigkeit, eine Bewegungsrichtung, eine Winkelposition und/oder eine Objektklassifizierung beinhalten.

4. Vorrichtung nach Anspruch 2 oder 3, wobei die physikalischen Messgrößen eine Zeit, eine Frequenzverschiebung, eine Phasenverschiebung, eine Laufzeitdifferenz, eine Signalintensität und/oder eine Amplitude beinhalten.

5. Vorrichtung nach einem der Ansprüche 1 bis 4, wobei das multimodale Sensorsignal (16) ein Ausgangssignal zumindest eines Radarsensors, insbesondere eines MIMO-Radarsensors, ist.

6. Vorrichtung nach einem der Ansprüche 1 bis 5, wobei das multimodale Sensorsignal (16) ein Signal eines funktional sicheren Sensors (14) ist.

7. Vorrichtung nach einem der Ansprüche 1 bis 6, wobei das erste trainierte neuronale Netz (22) dazu eingerichtet ist, eine Konturerkennung anhand des multimodalen Sensorsignals (16) durchzuführen, und wobei das erste Erfassungsergebnis einer Personenerkennung anhand der Konturerkennung entspricht.

8. Vorrichtung nach einem der Ansprüche 1 bis 7, wobei das zweite trainierte neuronal Netz (24) dazu eingerichtet ist, eine Spektralanalyse anhand des multimodalen Sensorsignals (16) durchzuführen, und wobei das zweite Erfassungsergebnis einer Personenerkennung anhand der Spektralanalyse entspricht.

9. Vorrichtung nach einem der Ansprüche 1 bis 8, ferner aufweisend: eine Verfolgungseinheit, die dazu ausgebildet ist, anhand des multimodalen Sensorsignals eine initiale Objektliste (42) auf der Grundlage der in dem multimodalen Sensorsignal (16) enthaltenen Objektabstandsinformationen zu erstellen.

10. Vorrichtung nach Anspruch 9, wobei die Vorrichtung dazu eingerichtet ist, das multimodale Sensorsignal (16) zyklisch aufzunehmen, und wobei die Verfolgungseinheit die initiale Objektliste (42) zyklisch aktualisiert.

11. Vorrichtung nach Anspruch 9 oder 10, wobei das erste Verarbeitungsverfahren und das zweite Verarbeitungsverfahren jeweils dazu eingerichtet sind, einem jedem Objekt der initialen Objektliste (42) einen Wahrscheinlichkeitswert, der eine Wahrscheinlichkeit angibt, dass das Objekt einer Person entspricht, zuzuordnen.

12. Vorrichtung nach einem der Ansprüche 9 bis 11, wobei die Validierungseinheit (28) dazu eingerichtet ist, für jedes Objekt der initialen Objektliste (42) einen Vergleich des ersten Erfassungsergebnisses und des zweiten Erfassungsergebnisses durchzuführen, insbesondere wobei die Validierungseinheit (28) dazu eingerichtet ist, den Vergleich zyklisch durchzuführen und ein Gesamtergebnis über mehrere Zyklen auszugeben.

13. Vorrichtung nach einem der Ansprüche 9 bis 12, ferner aufweisend: eine Steuereinheit, die dazu eingerichtet ist, anhand der Objektliste eine Steuerfunktion der technischen Anlage auszulösen.

14. Vorrichtung nach Anspruch 13, wobei die Steuereinheit dazu eingerichtet ist, für jedes Objekt der Objektliste anhand des multimodalen Sensorsignals (16) einen Abstand zu der technischen Anlage zu bestimmen, den Abstand mit einem Mindestabstand zu vergleichen sowie eine sicherheitsgerichtete Aktion auszulösen, wenn der Abstand eines Objekts der Objektliste den Mindestabstand unterschreitet, insbesondere wobei die Steuereinheit ferner eingerichtet ist, den Mindestabstand dynamisch zu bestimmen.

15. Verfahren (100) zur Erfassung von Personen in einem Überwachungsbereich einer technischen Anlage, aufweisend:
- Aufnehmen (S101) eines multimodalen Sensorsignals über eine erste Schnittstelle;
- Auswerten (S102) des multimodalen Sensorsignals mit einem ersten Verarbeitungsverfahren in einem ersten Verarbeitungskanal, um ein erstes Erfassungsergebnis zu generieren;
- Auswerten (S103) des multimodalen Sensorsignals mit einem zweiten Verarbeitungsverfahren in einem zweiten Verarbeitungskanal, um ein zweites Erfassungsergebnis zu generieren; sowie
- Vergleichen (S104) des ersten Erfassungsergebnisses mit dem zweiten Erfassungsergebnis durch eine Validierungseinheit,
**dadurch gekennzeichnet, dass**
das erste Verarbeitungsverfahren auf einem ersten trainierten neuronalen Netz basiert und das zweite Verarbeitungsverfahren auf einem zweiten trainierten neuronalen Netz basiert und das erste Verarbeitungsverfahren und das zweite Verarbeitungsverfahren diversitär verschieden voneinander sind.
